# EUROPÄISCHE PATENTANMELDUNG

(11) **EP 1 801 543 A2**
(43) Veröffentlichungstag der Anmeldung: **27.06.2007**
(21) Anmeldenummer: 06026564.2
(22) Anmeldetag: 21.12.2006
(51) Int. Cl.: G01D 5/14, G01D 5/16, G01B 7/00, G01B 7/30

(54) **Drehwinkelsensor**

(30) Priorität: 21.12.2005 DE 102005061707
(71) Anmelder: AB Elektronik GmbH, 59368 Werne (DE)
(72) Erfinder: Irrgang, Marcus, 44534 Lünen (DE)
(74) Vertreter: Wenzel & Kalkoff

(57) **Zusammenfassung**

Damit bei einer Vorrichtung zur Ermittlung eines Weges und/oder Position zweier relativ zueinander bewegbarer Einheiten flexiblere Anbaupositionen einfacher möglich werden, ist an einem Ende der ersten Einheit (3) das Magnetelement (1) und an einem anderen Ende ein Bewegungszentrum (5) angeordnet. Mit der zweiten Einheit (4) ist das magnetempfindliche Element (2) so gehalten, dass es auf dem Weg (BR) liegt, auf dem das Magnetelement (i) mit der ersten Einheit (3) zu bewegen ist.

## Beschreibung

Die Erfindung betrifft eine Vorrichtung zur Ermittlung eines Weges und/oder Position zweier relativ zueinander bewegbarer Einheiten mit wenigstens
- einem Magnetelement und
- einem magnetempfindlichen Element.
   Eine Vorrichtung der eingangs genannten Art ist aus der DE 195 03 335 A1 bekannt. In einer Abstandsausnehmung zwischen zwei Flussstücken, um die wenigstens ein Magnetringsegment bewegbar ist, ist ein Hallelement angeordnet. Dieses System wird wenigstens teilweise von einem Gehäuseelement umgeben.
   Nachteilig ist, dass dieses Bewegungssensorelement im Drehpunkt außerhalb eines Pedalelements angeordnet werden muss. Um das Bewegungssensorelement bei Überbetätigungen des Pedalelements nicht zu zerstören, muss außerdem eine Entkopplungseinheit vorgesehen werden.
   Aus der DE 196 24 233 C₁ ist ein Linearsensor bekannt, bei dem Flussstücke einen ersten und einen zu diesem senkrecht liegenden zweiten Luftspalt ausbilden. Allerdings wird hier ein Magnetelement, das an einem Bolzen angeordnet ist, gegenüber einem Hallelement, das im ersten Luftspalt angeordnet ist, linear verschoben.
   Aus der DE 03 712 808 T2 (WO 03 081 182 A2) ist eine Winkelbestimmungsvorrichtung bekannt, bei der sich eine Magnetquelle um eine Achse dreht und das von ihr erzeugte Magnetfeld von zwei magnetischen Sensorelementen erfasst wird.
   In der EP 11 82 461 A2 ist ein Sensor für die Detektion der Richtung eines Magnetfeldes beschrieben, der einen Halbleiterchip mit sechs horizontalen Hallelementen und einen Magnetfeldkonzentrator umfasst. Ein ein Magnetfeld erzeugender Permanentmagnet dreht sich über dem Magnetfeldkonzentrator und den Hallelementen.
   Aus der EP 12 43 898 A1 ist ein magnetischer Weggeber bekannt, der eine Magnetfeldquelle und einen Magnetfeldsensor umfasst, die entlang einer vorgegebenen Bahn relativ zueinander verschiebbar sind. Der Magnetfeldsensor misst zwei Komponenten des von der Magnetquelle erzeugten Magnetfeldes. Aus den gemessenen Komponenten wird dann das Positionssignal abgeleitet, das die relative Lage von Magnetfeldsensor und Magnetfeldquelle darstellt. Ausführungen des Weggebers beinhalten die Bestimmung des Positionssignals durch Division der beiden gemessenen Komponenten des Magnetfeldes. Das Positionssignal ist eine Funktion des Ortes.
   Es stellt sich die Aufgabe, eine Vorrichtung zur Ermittlung eines Weges und/oder Position zweier relativ zueinander bewegbarer Einheiten so weiter zu entwickeln, dass flexiblere Anbaupositionen einfacher möglich werden.
   Erfindungsgemäß wird diese Aufgabe dadurch gelöst,
- dass an einem Ende der ersten Einheit das Magnetelement und an einem anderen Ende ein Bewegungszentrum angeordnet ist und
- dass mit der zweiten Einheit das magnetempfindliche Element so gehalten ist, dass es auf dem Weg liegt, auf dem das Magnetelement mit der ersten Einheit zu bewegen ist.

Die mit der Erfindung erzielten Vorteile bestehen insbesondere darin, dass die Sensorik jetzt sehr flexibel in Bezug auf die Anbauposition ist. Außerdem sind die Einheiten bewegungsfrei, so dass keine Entkopplungseinrichtung erforderlich ist.

So können mit dem Magnetelement kreis-, teilkreis-, ellipsenförmige, gerade lineare Bewegungen und Positionen erfasst werden. Es ist auch eine Kombination der Wege möglich. Mit der Erfassungsmöglichkeit kreisförmiger Wege und Positionen auf ihnen lässt sich ein Drehwinkelsensor realisieren.

Die erste Einheit kann eine Rotoreinheit sein, die als Rotorarm ausgebildet sein kann, der um ein Rotordrehzentrum als Bewegungszentrum bewegbar ist und an dem, dem Rotordrehzentrum gegenüber liegend, das Magnetelement, angeordnet ist. Hierdurch wird vorrangig eine kreis- bzw. teilkreisförmige Bewegung des Rotorarms ermöglicht. Der Rotorarm kann an bzw. in einem Pedalelement, einem Nockenwellenelement oder dgl. angeordnet werden.

Die andere dazu gehörige Einheit kann eine Statoreinheit sein, von der das magnetempfindliche Element gehalten werden kann. Beide Einheiten machen den bereits erwähnten flexiblen Einbau möglich. Das magnetempfindliche Element kann Teil eines integrierten Schaltkreises -ASIC- sein.

Das magnetempfindliche Element ist bevorzugt an nichtmagnetischem Material, bspw. Kunststoff gehalten. Besonders bevorzugt kann so auf zusätzliche Flussleitstücke, Joche etc. verzichtet werden und allein das freie Magnetfeld des Magnetelements erfasst werden.

Das Magnetelement kann zum magnetempfindlichen Element einen Führabstand haben. Der Führabstand kann sich mit der Wegstrecke bzw. der Position verändern und/oder konstant sein.

Als Rotordrehzentrum kann in einem Achsarmaufnahmeelement des Rotorarms ein Wellenelement angeordnet werden.

Das Magnetelement kann mit einer Magnetlänge in einer Magnetaufnahmeausnehmung eines Magnetaufnahmeelements angeordnet sein. Die Magnetlänge kann einem zu messenden Weg bzw. Winkel entsprechen.

Zwischen dem Magnetaufnahmeelement und dem Achsarmaufnahmeelement kann ein Stabelement angeordnet werden.

Der so aufgebaute Rotorarm ermöglicht eine sichere Führung des Magnetelements gegenüber dem magnetempfindlichen Element. Durch eine Längenänderung des Stabelements lässt sich der Radius variieren.

Das Magnetelement kann eine radiale Magnetisierung, eine diametrale Magnetisierung oder dgl. Magnetisierung aufweisen. Hierdurch wird eine Optimierung des Messsignals gewährleistet. Es ist auch möglich, beide Magnetisierungsformen miteinander zu kombinieren.
Das magnetempfindliche Element kann ein Hall-Element, ein MR-Element oder dgl. sein. Bei einem MR-Element handelt es sich um eine magneto-resistive Einheit, die z. B. ein GMR-Element sein kann.

Das Magnetelement kann als Permanentmagnet ausgebildet werden.

Die Erfindung ist in der Zeichnung dargestellt und wird im folgenden näher erläutert. Es zeigen:
- Fig. 1: einen Drehwinkelsensor in einer schematisch dargestellten Schnittdarstellung,
- Fig. 2: eine Draufsicht auf einen Drehwinkelsensor gemäß Fig. 1 in einer schematischen Darstellung,
- Fig. 3-6: verschiedene Ausführungsformen eines Magnetelements eines Drehwinkelsensors gemäß Fig. 1 und 2 und
- Fig. 7: ein Fahrpedalelement mit einem Drehwinkelsensor gemäß Fig. 1 bis 2 in einer schematisch dargestellten Seitenansicht.

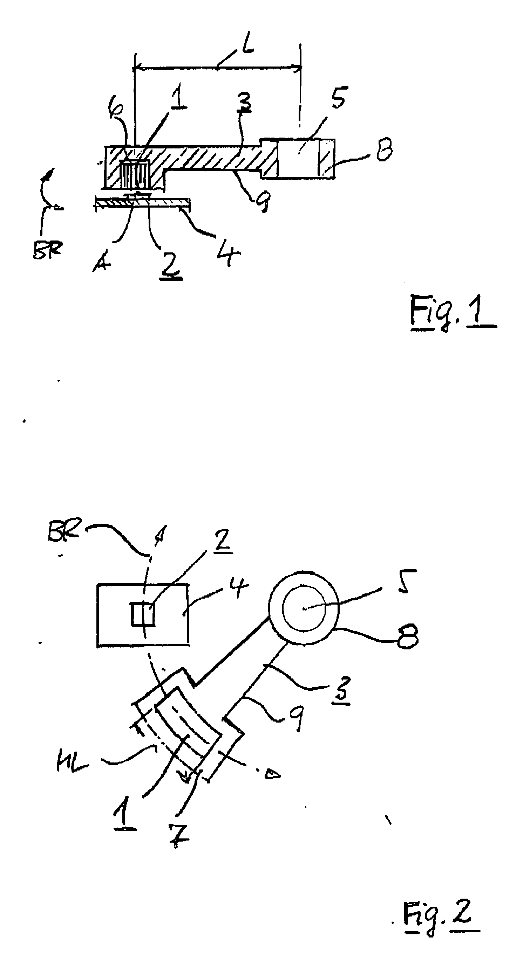

Ein Drehwinkelsensor ist in Fig. 1 und 2 dargestellt, der aus einer Rotor- und einer Statoreinheit besteht.

Die Rotoreinheit weist einen Rotorarm 3 auf, der aus einem Magnetaufnahmeelement 7 und einem Achsenaufnahmeelement 8 besteht, die durch ein Stabelement 9 verbunden sind.

In dem Achsenaufnahmeelement 8 ist ein Achselement 5 angeordnet, das zugleich den Rotordrehpunkt bestimmt.

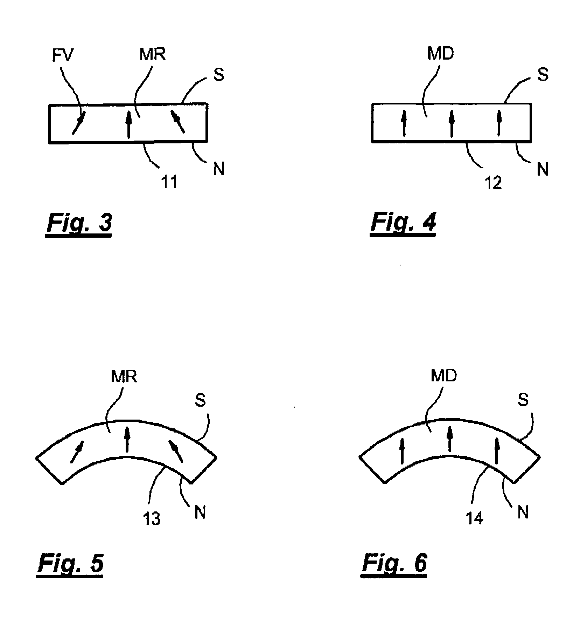

Im Magnetaufnahmeelement 7 ist eine Magnetaufnahmeausnehmung 6 eingebracht, die ein Magnetelement 1 mit einer Magnetlänge ML aufnimmt. Die Magnetlänge entspricht der Länge eines zu messenden Weges BR. Magnetelement und Achselement 5 sind in einer Abstandslänge L zueinander positioniert. Die Abstandslänge L kann je nach Einbausituation unterschiedlich lang gewählt werden.
Das Magnetelement ist ein Permanentmagnet und kann als
- radial magnetisierter Stabmagnet 11 gemäß Fig. 3,
- diametral magnetisierter Stabmagnet 12 gemäß Fig. 4,
- radial magnetisierter Segmentmagnet 13 gemäß Fig. 5,
- diametral magnetisierter Segmentmagnet 14 gemäß Fig. 6
   ausgebildet werden. Die radiale Magnetisierung gibt zusätzlich die Möglichkeit, den Messbereich in Bezug auf den Winkelbereich des Magneten zu beeinflussen.

Die Statoreinheit 4 hält ein Hall-Element 2 so, dass zwischen ihm und dem Magnetelement 1 ein Führabstand A gebildet wird.

Bewegt sich nun der Rotorarm 3 als Weg in einer radialen Bewegungsrichtung BR über die Statoreinheit 4, verändern sich Führungsvektoren FV entsprechend. Aus der Vektoränderung ermittelt ein integrierter Schaltkreis -ASIC- , in dem sich das Hall-Element 2 befindet, den jeweiligen Weg bzw. Position.

Wird der radial magnetisierte Segmentmagnet 13 gemäß Fig. 5 eingesetzt, ist dessen Messbereich länger als die Länge des Segmentmagneten 13 selbst.

Mit dem Weg- und/oder Positionssensor, wie er für die radiale Bewegung beschrieben worden ist, lässt sich auch ein Linearsensor aufbauen.

Der Rotorarm 3 wird dabei mit dem Wellenelement 5 an einer Schiene (nicht dargestellt) entlang geführt. Außerdem wird das Magnetelement 1 um 90° versetzt zur Linearbewegung aufmagnetisiert, so dass bei einer Bewegung längs dieser Dimension die Feldlinien des Feldes ihre Richtung ändern. Das Hall-Element 2 nimmt diese Veränderung auf und gibt einen entsprechenden Wert aus.

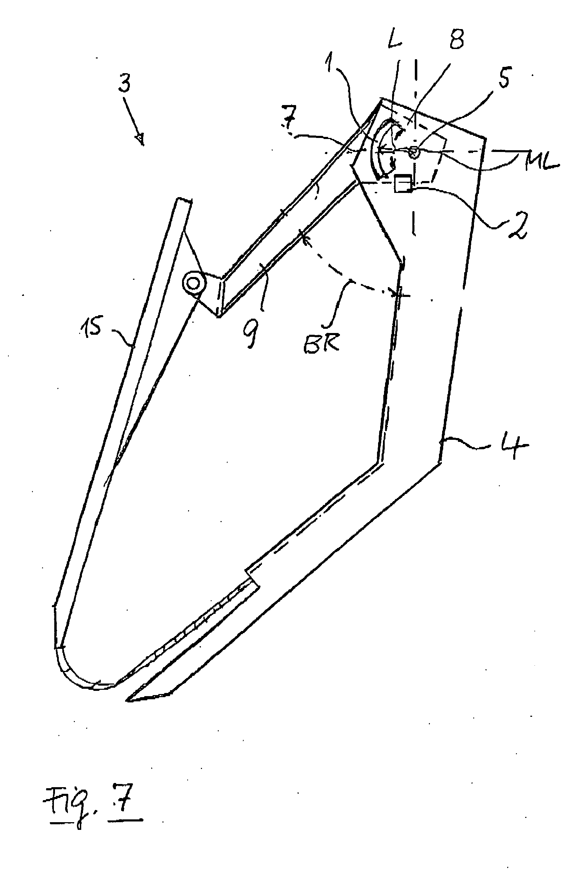

In Fig. 7 ist ein Fahrpedalelement dargestellt, in den ein Drehwinkelsensor gemäß Fig. 1 bis 2 eingebaut ist. Zur Verdeutlichung der Einbausituation werden weitestgehend die gleichen Begriffe und Bezugszeichen wie in dem beschriebenen allgemeinen Sensoraufbau verwendet.

Das Fahrpedalelement besteht aus einer Basiseinheit als Statoreinheit 4. In der Statoreinheit ist ein Pedalelement als Rotorarm 3 in einem Drehpunkt 5 angeordnet. Im Drehpunkt 5 befindet sich eine Achsaufnahmeausnehmung 8, in der ein Wellenelement eingelassen ist.

Der Rotorarm 3 besteht aus einem Stabelement 9, das gelenkig mit einem Fahrpedalplattenelement 15 verbunden ist. Ein Kettenelement 16 ist zwischen dem Ende des Fahrpedalplattenelements 15 und der Statoreinheit 4 angeordnet.

In dem Stabelement 9 ist nahe dem Drehpunkt 5 eine Magnetaufnahmeausnehmung 7 eingelassen, in der ein Magnetelement 1 mit einer Magnetlänge angeordnet ist. Die Magnetlänge entspricht der Größe des aufzunehmenden Stellungswinkels des Stabelements 9. Diese Entsprechung beinhaltet die in der jeweiligen Anwendung zu beachtenden Anforderungen an Toleranzen, Linearitäten etc.

Das Magnetelement 1 bewegt sich bei Auslenkung des Stabelements 9 durch Betätigung des Fahrpedalplattenelements 15 in einer Bewegungsrichtung BR über ein Hall-Element 4, das in der Statoreinheit eingelassen ist. Der radial magnetisierte Segmentmagnet 13 ändert bei der Bewegung BR den Feldvektor FV, der durch einen integrierten Schaltkreis -ASIC-, in dem sich das Hall-Element 2 befindet, aufgenommen wird und ermittelt den jeweiligen Stellungswinkel.

Der große Vorteil ist hierbei, dass der Drehwinkelsensor in das Fahrpedalelement integriert werden kann. Er beansprucht keinen separaten Platz, keine besonderen Schutzeinrichtungen gegen Überdrehung und seine aktiven Teile Magnet 1 und Hall-Element 2 werden auf einfache Art und Weise von den Teilen des Fahrpedalelements aufgenommen. Wird das Fahrpedalelement aus Kunststoff geformt, können Magnet und ASIC mit Hall-Element mit eingeformt werden, die hierdurch aktiv gegen äußere Einflüsse, wie Staub, Feuchtigkeit und dgl. geschützt sind.

## Patentansprüche

1. Vorrichtung zur Ermittlung eines Weges und/oder Position zweier relativ zueinander bewegbarer Einheiten (3, 4) mit wenigstens
- einem Magnetelement (1) und
- einem magnetempfindlichen Element (2),
**dadurch gekennzeichnet,**
- **dass** an einem Ende der ersten Einheit (3) das Magnetelement (1) und an einem anderen Ende ein Bewegungszentrum (5) angeordnet ist und
- **dass** mit der zweiten Einheit (4) das magnetenipfindliche Element (2) so gehalten ist, dass es auf dem Weg (BR) liegt, auf dem das Magnetelement (1) mit der ersten Einheit (3) zu bewegen ist.

2. Vorrichtung nach Anspruch 1, **dadurch gekennzeichnet, dass** mit dem Magnetelement (1) kreis-, teilkreis-, ellipsoidförmige und/oder gerade lineare Bewegungen und Positionen zu erfassen sind.

3. Vorrichtung nach Anspruch 1 oder 2, **dadurch**, dass die erste Einheit eine Rotoreinheit ist, die als Rotorarm ausgebildet ist, der um ein Rotordrehzentrum (5) als Bewegungszentrum bewegbar ist und an dem, dem Rotordrehzentrum gegenüber liegend, das Magnetelement (1) angeordnet ist.

4. Vorrichtung nach einem der Ansprüche 1 bis 3, **dadurch gekennzeichnet, dass** die andere Einheit eine Statoreinheit (4) ist, von der das magnetempfindliche Element (2), das Teil eines integrierten Schaltkreises -ASIC- ist, gehalten ist.

5. Vorrichtung nach einem der Ansprüche 1 bis 4, **dadurch gekennzeichnet, dass** das Magnetelement (1) zum magnetempfindlichen Element (2) einen Führabstand (A) hat.

6. Vorrichtung nach einem der Ansprüche 1 bis 5, **dadurch gekennzeichnet, dass** als Rotordrehzentrum in einem Achsarmaufnahmeelement (8) des Rotorarms (3) ein Wellenelement (5) angeordnet ist.

7. Vorrichtung nach einem der Ansprüche 1 bis 6, **dadurch gekennzeichnet, dass** das Magnetelement (1) mit einer Magnetlänge (ML) in einer Magnetaufnahmeausnehmung (6) eines Magnetaufnahmeelements (7) angeordnet ist.

8. Vorrichtung nach einem der Ansprüche 1 bis 7, **dadurch gekennzeichnet, dass** zwischen dem Magnetaufnahmeelement (7) und dem Achsarmaufnahmeelement (8) ein Stabelement (9) angeordnet ist.

9. Vorrichtung nach einem der Ansprüche 1 bis 8, **dadurch gekennzeichnet, dass** das Magnetelement (1) eine radiale Magnetisierung (MR), eine diametrale Magnetisierung (MD) oder dgl. Magnetisierung aufweist.

10. Vorrichtung nach einem der Ansprüche 1 bis 9, **dadurch gekennzeichnet, dass** das magnetempfindliche Element ein Hall-Element (2), ein magnetoresistives Element oder dgl. ist.

11. Vorrichtung nach einem der Ansprüche 1 bis 10, **dadurch gekennzeichnet, dass** das Magnetelement (1) ein Permanentmagnet ist.

12. Vorrichtung nach einem der vorhergehenden Ansprüche, **dadurch gekennzeichnet, dass** das magnetempfindliche Element (2) an nichtmagnetischem Material befestigt ist.

13. Vorrichtung nach einem der vorhergehenden Ansprüche, **dadurch gekennzeichnet, dass** das magnetempfindliche Element (2) so angeordnet ist, dass das freie Magnetfeld des Magnetelements (1) erfasst wird.
